# EUROPEAN PATENT APPLICATION

(11) **EP 2 858 439 A1**
(43) Date of publication of application: **08.04.2015**
(21) Application number: 13850424.6
(22) Date of filing: 29.10.2013
(51) Int. Cl.: H04W 72/04

(54) **CONTROL INFORMATION TRANSMISSION METHOD, BASE STATION, AND USER EQUIPMENT**

(30) Priority: 31.10.2012 CN 201210427805
(71) Applicant: Huawei Device Co., Ltd., Longgang District Shenzhen Guangdong 518129 (CN)
(72) Inventor: WANG, Jian, Shenzhen Guangdong 518129 (CN); GAO, Chi, Shenzhen Guangdong 518129 (CN); WU, Qiang, Shenzhen Guangdong 518129 (CN)
(74) Representative: Pfenning, Meinig & Partner GbR
(86) International application number: PCT/CN2013/086161
(87) International publication number: WO 2014/067451

(57) **Abstract**

The present invention provides a method for transmitting control information, a base station, and a user equipment. The method includes: sending, by a base station, control information to a user equipment UE by using an enhanced physical downlink control channel EPDCCH physical resource set, wherein the base station determines, according to a mapping rule, a physical resource for sending the control information, so that the UE determines, according to the mapping rule, a carrier to which the control information is applied, where a carrier bearing the control information is the same as or different from the carrier to which the control information is applied, and the mapping rule is a correspondence between a carrier and a physical resource. The foregoing method solves problems of large control information overheads and resource waste caused by lack of configuration of an EPDCCH which can support cross-carrier scheduling in an LTE system in the prior art.

## Description

### CROSS-REFERENCE TO RELATED APPLICATIONS

This application claims priority to Chinese Patent Application No. CN201210427805.5, filed with the Chinese Patent Office on October 31, 2012, and entitled "METHOD FOR TRANSMITTING CONTROL INFORMATION, BASE STATION, AND USER EQUIPMENT", which is incorporated herein by reference in its entirety.

### TECHNICAL FIELD

Embodiments of the present invention relate to the field of communications, and in particular, to a method for transmitting control information, a base station, and a user equipment.

### BACKGROUND

Based on a cell-specific reference signal (for example, a common pilot), in search space of a PDCCH (Physical Downlink Control Channel), a user equipment (UE) demodulates and decodes the PDCCH according to a payload size and an aggregation level (there are four aggregation levels, namely 1, 2, 4, and 8) of the PDCCH, then performs descrambling by using a radio network temporary identity RNTI) (that is, a type of scrambling code or an identity) corresponding to the UE, so as to check and determine the PDCCH of the UE by using cyclic redundancy check (CRC), and performs, according to scheduling information on the PDCCH, corresponding receiving or sending processing on service data scheduled by the the UE.

A complete PDCCH includes one or more control channel elements (CCE), one CCE includes 9 resource element groups (REG), and one REG occupies 4 REs. According to the LTE Release 8/9/10 standard, one PDCCH may include 1, 2, 4, or 8 CCEs.

In an LTE system after the LTE Release 10, multi-user technologies such as multiple-input multiple-output (MIMO) and coordinated multi-point (CoMP) are used, and a deployment scenario evolves from a homogeneous network into a heterogeneous network. In a heterogeneous network, interference of a macro cell (Macro) to a signal of a micro cell (Micro) is great, which reduces reliability and a capacity of a control channel (PDCCH). To solve the foregoing problem, an enhanced physical downlink control channel (E-PDCCH) that performs transmission based on a MIMO precoding manner is introduced in a 3GPP LTE system. An E-PDCCH may be demodulated based on a UE-specific reference signal-a demodulation reference signal (DMRS).

An EPDCCH is not in a control area of first n symbols of a subframe but in an area, in the subframe, for transmitting downlink data. A frequency resource is is separated from a physical downlink shared channel (PDSCH) by frequency division and the EPDCCH and the PDSCH may occupy different RBs. In the LTE Release 11, a reference signal of an EPDCCH reuses a structure of a reference signal (referred to as DMRS in the following) of a PDSCH in transmission mode 9 (TM9) defined in the Release 10. In a multi-carrier aggregation scenario, an LTE system supports cross-carrier scheduling. The so-called cross-carrier scheduling refers to that a carrier where control information for scheduling a base station (eNodeB, eNB) and a UE to perform data communication is located is different from a carrier where service data for the data communication is located. When cross-carrier scheduling occurs, a carrier indicator field (CIF) is used in control information to indicate a carrier, where the control information acts on service data of the carrier.

So far, cross-carrier scheduling in all standard processes occurs in a PDCCH area, that is, when the system uses cross-carrier scheduling, a present system can only use the PDCCH area. Especially in a new carrier type (NCT) scenario in the rel.12, a system uses an EPDCCH as far as possible, and tries not to configure a PDCCH area at this time. In this case, when the system needs to configure a cross-carrier function for some UEs, PDCCH channels need to be individually configured for these UEs, which results in large control information overheads in the system and therefore causes resource waste.

### SUMMARY

In view of this, embodiments of the present invention provide a method for transmitting control information, a base station, and a user equipment, which are used to solve problems of large control information overheads and resource waste caused by lack of configuration of an EPDCCH which can support cross-carrier scheduling in an LTE system in the prior art.

According to a first aspect, an embodiment of the present invention provides a method for transmitting control information, including:
sending, by a base station, control information to a user equipment UE by using an enhanced physical downlink control channel EPDCCH physical resource set, wherein the base station determines, according to a mapping rule, a physical resource for sending the control information, so that the UE determines, according to the mapping rule, a carrier to which the control information is applied,
where a carrier bearing the control information is the same as or different from the carrier to which the control information is applied, and the mapping rule is a correspondence between a carrier and a physical resource.

In a first possible implementation manner of the first aspect, the physical resource includes the EPDCCH physical resource set EPDCCH-PRB-SET.

With reference to the first aspect and the foregoing possible implementation manner, in a second possible implementation manner, the mapping rule includes:
a rule of establishing a correspondence between an EPDCCH physical resource set and a carrier by using an EPDCCH physical resource set as a unitestablishing a correspondence between an EPDCCH physical resource set and a carrier by using an EPDCCH physical resource set as a unit; or
a rule of establishing a correspondence between an enhanced control channel element ECCE and a carrier by using an ECCE in the EPDCCH physical resource set as an element; or
a rule of establishing a correspondence between a physical resource block pair PRB Pair and a carrier by using a PRB Pair in the EPDCCH physical resource set as an element; or
a rule of establishing a correspondence between an enhanced resource element group EREG and a carrier by using an EREG in the EPDCCH physical resource set as an element; or
a rule of establishing a correspondence between an antenna port AP and a carrier by using an AP in the EPDCCH physical resource set as an element.

With reference to the first aspect and the foregoing possible implementation manners, in a third possible implementation manner, the mapping rule is configured and sent to the UE by the base station;
or the mapping rule is a rule which is predefined and known to both the base station and the UE.

With reference to the first aspect and the foregoing possible implementation manners, in a fourth possible implementation manner, before the base station determines, according to the mapping rule, the physical resource for sending the control information, the method further includes:
establishing, by the base station, the mapping rule when configuring the EPDCCH physical resource set, and sending the mapping rule to the UE;
or establishing, by the base station, the mapping rule when configuring the carrier, and sending the mapping rule to the UE.

With reference to the first aspect and the second possible implementation manner, in a fifth possible implementation manner, the rule of establishing a correspondence between an EPDCCH physical resource set and a carrier by using an EPDCCH physical resource set as a unitestablishing a correspondence between an EPDCCH physical resource set and a carrier by using an EPDCCH physical resource set as a unit includes:
sorting EPDCCH physical resource sets, sorting carriers, and establishing a correspondence between the sorted EPDCCH physical resource sets and the sorted carriers.

With reference to the first aspect and the fifth possible implementation manner, in a sixth possible implementation manner, the sorting EPDCCH physical resource sets is specifically:
sorting the EPDCCH physical resource sets according to IDs of the EPDCCH physical resource sets;
and/or the sorting carriers is specifically: sorting the carriers according to IDs of the carriers.

With reference to the first aspect and the second possible implementation manner, in a seventh possible implementation manner, the rule of establishing a correspondence between an ECCE and the carrier by using an ECCE in the EPDCCH physical resource set as an element includes:
grouping ECCEs in the EPDCCH physical resource set, sorting carriers, and establishing a correspondence between the grouped ECCEs and the sorted carriers.

With reference to the first aspect and the seventh possible implementation manner, in an eighth possible implementation manner, the grouping ECCEs in the EPDCCH physical resource set, sorting carriers, and establishing a correspondence between the grouped ECCEs and the sorted carriers is specifically:
dividing the number of the carriers by index values of the ECCEs when the ECCEs in the EPDCCH physical resource sets are grouped, to obtain remainders, and grouping ECCEs with a same operation result into a group; and establishing a correspondence between the group and a carrier which has a same sequence number as the operation result after the carriers are sorted.

According to a second aspect, an embodiment of the present invention further provides a method for transmitting control information, including:
receiving, by a UE, control information, which is sent by a base station by using an EPDCCH physical resource set, where before the base station sends the control information, the base station determines, according to a mapping rule, a physical resource for sending the control information; and
determining, by the UE according to the mapping rule, a carrier to which the control information is applied,
where a carrier bearing the control information is the same as or different from the carrier to which the control information is applied, and the mapping rule is a correspondence between a carrier and a physical resource.

With reference to the second aspect, in a first possible implementation manner, the physical resource includes the EPDCCH physical resource set EPDCCH-PRB-SET.

With reference to the second aspect and the foregoing possible implementation manner, in a second possible implementation manner, the mapping rule includes:
a rule of establishing a correspondence between an EPDCCH physical resource set and a carrier by using an EPDCCH physical resource set as a unitestablishing a correspondence between an EPDCCH physical resource set and a carrier by using an EPDCCH physical resource set as a unit;
or a rule of establishing a correspondence between an enhanced control channel element ECCE and a carrier by using an ECCE in the EPDCCH physical resource set as an element;
or a rule of establishing a correspondence between a physical resource block pair PRB Pair and a carrier by using a PRB Pair in the EPDCCH physical resource set as an element;
or a rule of establishing a correspondence between an enhanced resource element group EREG and a carrier by using an EREG in the EPDCCH physical resource set as an element;
or a rule of establishing a correspondence between an antenna port AP and a carrier by using an AP in the EPDCCH physical resource set as an element.

With reference to the second aspect and the foregoing possible implementation manners, in a third possible implementation manner, the mapping rule is a rule which is received by the UE and configured and sent by the base station;
or the mapping rule is a rule which is predefined and known to both the base station and the UE.

With reference to the second aspect and the foregoing possible implementation manners, in a fourth possible implementation manner, before the receiving, by a UE, control information, which is sent by a base station by using an EPDCCH physical resource set in a physical resource, the method further includes:
receiving, by the UE, the mapping rule, which is sent by the base station and established by the base station when the EPDCCH physical resource set is configured;
or receiving, by the UE, the mapping rule, which is sent by the base station and established by the base station when the carrier is configured.

According to a third aspect, an embodiment of the present invention further provides a base station, including:
a sending unit, configured to send control information to a user equipment UE by using an enhanced physical downlink control channel EPDCCH physical resource set, wherein the base station determines, according to a mapping rule, a physical resource for sending the control information, so that the UE determines, according to the mapping rule, a carrier to which the control information is applied,
where a carrier bearing the control information is the same as or different from the carrier to which the control information is applied, and the mapping rule is a correspondence between a carrier and a physical resource.

With reference to the third aspect, in a first possible implementation manner, the mapping rule is configured and sent, by using the sending unit, to the UE by the base station;
or the mapping rule is a rule which is predefined and known to both the base station and the UE.

With reference to the third aspect, in a second possible implementation manner, the base station further includes: a mapping rule establishing unit, configured to establish the mapping rule when the EPDCCH physical resource set is configured;
or configured to establish the mapping rule when the carrier is configured, where
correspondingly, the sending unit is configured to send the mapping rule established by the mapping rule establishing unit to the UE.

According to a fourth aspect, an embodiment of the present invention further provides a user equipment, including:
a receiving unit, configured to receive control information, which is sent by a base station by using an EPDCCH physical resource set, where before the base station sends the control information, the base station determines, according to a mapping rule, a physical resource for sending the control information; and
a determining unit, configured to determine, according to the mapping rule, a carrier to which the control information is applied,
where a carrier bearing the control information is the same as or different from the carrier to which the control information is applied, and the mapping rule is a correspondence between a carrier and a physical resource.

With reference to the fourth aspect, in a first possible implementation manner, the mapping rule is a rule which is received by the receiving unit and configured and sent by the base station;
or the mapping rule is a rule which is predefined and known to both the base station and the UE.

With reference to the fourth aspect, in a second possible implementation manner, the receiving unit is further configured to:
receive the mapping rule, which is sent by the base station and established by the base station when the EPDCCH physical resource set is configured;
or receive the mapping rule, which is sent by the base station and established by the base station when the carrier is configured.

It can be known from the foregoing technical solutions that, according to the method for transmitting control information, the base station, and the user equipment in the embodiments of the present invention, a base station sends control information to a UE by using an EPDCCH physical resource set, and before sending the control information, the base station determines, according to a mapping rule, a physical resource for sending the control information, so that the UE determines, according to the mapping rule of a correspondence between a physical resource and a carrier, a carrier to which the control information is applied, where a carrier bearing the control information is the same as or different from the carrier to which the control information is applied, thereby solving problems of large control information overheads and resource waste caused by lack of configuration of an EPDCCH which can support cross-carrier scheduling in an LTE system in the prior art.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show some embodiments of the present invention, and persons of ordinary skill in the art may still derive other drawings from these accompanying drawings without creative efforts.
FIG. 1 is a schematic diagram of location distribution of PDCCHs and EPDCCHs;
FIG. 2 is a schematic diagram of PDCCHs acting on carriers during cross-carrier scheduling;
FIG. 3A is a schematic flowchart of a method for transmitting control information according to an embodiment of the present invention;
FIG. 3B and FIG. 3C are diagrams showing correspondences between EPDCCH physical resource sets and carriers according to an embodiment of the present invention;
FIG. 4A to FIG. 4C are diagrams showing correspondences between EPDCCH physical resource sets and carriers according to an embodiment of the present invention;
FIG. 5A and FIG. 5B are schematic flowcharts of a method for transmitting control information according to another embodiment of the present invention;
FIG. 6 is a schematic flowchart of a method for transmitting control information according to another embodiment of the present invention;
FIG. 7 is a schematic structural diagram of a base station according to another embodiment of the present invention; and
FIG. 8 is a schematic structural diagram of a user equipment according to an embodiment of the present invention.

### DESCRIPTION OF EMBODIMENTS

To make the objectives, technical solutions, and advantages of the present invention clearer, the following clearly and completely describes the technical solutions of the present invention with reference to the accompanying drawings in the embodiments of the present invention. Apparently, the described embodiments are a part of the embodiments of the present invention. Based on the following embodiments of the present invention, persons of ordinary skill in the art may obtain other embodiments, which can solve the technical issue of the present invention and achieve the technical effect of the present invention, by making equivalent changes to some or all technical features, without any creative effort, and the embodiments obtained by these changing apparently do not depart from the scope disclosed in the present invention.

In a 3rd Generation Partnership Project (3GPP) Long Term Evolution (LTE) system or a 3GPP LTE-advanced (LTE-A) system, an orthogonal frequency division multiple access (OFDMA) manner may be used as a downlink multiple access manner.

Specifically, in terms of time, a downlink resource of the foregoing system is divided into orthogonal frequency division multiple (OFDM) symbols; in terms of frequency, the downlink resource is divided into subcarriers. Generally, a subcarrier in an OFDM symbol is referred to as a resource element (RE).

In addition, according to the LTE Release 8/9/10 standard, a downlink subframe includes two timeslots (slot) and each timeslot has 7 or 6 OFDM symbols, that is,includes 14 or 12 REs altogether. When a normal cyclic prefix (CP) length is used, each timeslot includes 7 OFDM symbols and includes 14 REs altogether, and when an extended CP length is used, each timeslot includes 6 OFDM symbols and a downlink subframe includes 12 Res altogether.

In addition, the LTE Release 8/9/10 standard defines a resource block (RB). An RB includes 12 subcarriers in a frequency domain, and is a timeslot in a time domain, that is, includes 7 or 6 OFDM symbols, and therefore an RB includes 84 or 72 REs. On same subcarriers within a subframe, a pair of RBs of two timeslots is referred to as a resource block pair (RB pair), that is, an RB pair.

Various types of data borne in a subframe is mapped by dividing a physical time-frequency resource of the subframe into various physical channels. The various physical channels may be generally classified into two types: control channels and service channels. Correspondingly, data borne by a control channel may be referred to as control data (which may be generally referred to as control information), and data borne by a service channel may be referred to as service data (which may be generally referred to as data). A fundamental objective of sending a subframe is to transmit service data, and a function of a control channel is to assist in transmission of service data.

In LTE Release 10 and earlier LTE systems, a PDCCH and a physical downlink shared channel (PDSCHt) are separated on a subframe by time division. The PDCCH is borne within first n OFDM symbols of a subframe, where n may be any one of 1, 2, 3, and 4. In a frequency domain, the PDCCH and the PDSCH are distributed onto an entire system bandwidth after undergoing interleaving processing, so as to obtain a frequency diversity gain; and downlink data scheduled by the PDCCH starts to be mapped from the (n+1)^{th} symbol of the subframe.

Based on a cell-specific reference signal (for example, a common pilot (Common Reference Signal, CRS)), in search space of a PDCCH, a UE demodulates and decodes the PDCCH according to a payload size and an aggregation level (there are four aggregation levels: 1, 2, 4, and 8) of the PDCCH, then performs descrambling by using an RNTI specific to the UE, so as to check and determine the PDCCH of the UE by using CRC, and performs, according to scheduling information on the PDCCH, corresponding receiving or sending processing on data scheduled by the PDCCH.

A complete PDCCH includes one or more CCEs, one CCE includes 9 REGs, and an REG occupies 4 REs. According to the LTE Release 8/9/10 standard, one PDCCH may include 1, 2, 4, or 8 CCEs.

In an LTE system after the LTE Release10, with introduction of multi-user technologies such as MIMO and CoMP, a capacity of a control channel is limited, and therefore an E-PDCCH that performs transmission based on a MIMO precoding manner is introduced. An E-PDCCH may be demodulated based on a UE-specific reference signal-DMRS. Each EPDCCH may still be mapped to k logic units which are similar to CCEs and are defined herein as enhanced control channel elements (ECCE), and a UE needs to perform blind detection on a terminal side. Following the definition of aggregation levels of the PDCCH, an EPDCCH of an aggregation level L (L=1, 2, 4, 8, or the like) may be mapped to L ECCEs, that is, includes L ECCEs. One ECCE includes one or more enhanced resource element groups (eREG).

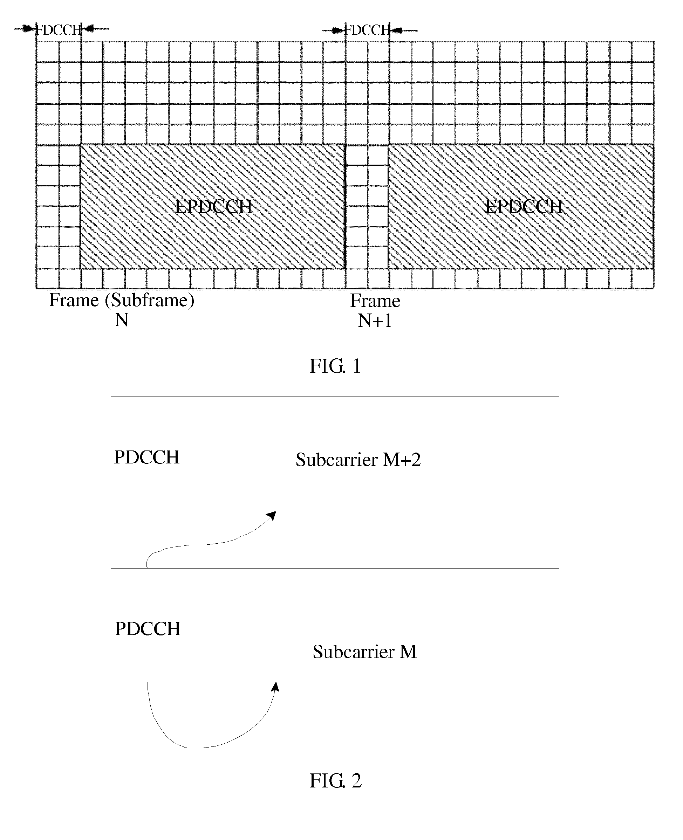

As shown in FIG. 1, FIG. 1 shows a schematic diagram of locations of PDCCHs and EPDCCHs. In a multi-carrier aggregation scenario, an LTE system supports cross-carrier scheduling. The so-called cross-carrier scheduling refers to that a carrier where a control signal for scheduling an eNodeB and a UE to perform data communication on a certain carrier is located is different from the carrier where the data communication is performed. When cross-carrier scheduling occurs, a CIF is used in control information to indicate a carrier on which the control information acts, as shown in FIG. 2.

However, so far, cross-carrier scheduling in all standard processes occurs in a PDCCH area, as shown in FIG. 2. No content about using an EPDCCH to perform cross-carrier scheduling is disclosed.

That is, in the prior art, only PDCCH configuration required by an LTE system for cross-carrier scheduling exists. Therefore, when a system uses cross-carrier scheduling, a present system can only use a PDCCH area. Especially in a new carrier type (NCT) scenario in the rel.12, a system uses an EPDCCH as far as possible, and tries not to configure a PDCCH area at this time. In this case, when the system needs to configure a cross-carrier function for some UEs, PDCCH channels need to be individually configured for these UEs, which results in large control information overheads in the system and therefore causes resource waste.

Therefore, the embodiments of the present invention provide a method, for transmitting control information, which is used for implementing flexible configuration of an EPDCCH in a system, so as to reduce an overhead of a control channel of the system and further reduce resource waste in the system.

### Embodiment 1

This embodiment provides a method for transmitting control information, specifically including:
sending, by a base station, control information to a UE by using an EPDCCH physical resource set, wherein the base station determines, according to a mapping rule, a physical resource for sending the control information, so that the UE determines, according to the mapping rule, a carrier to which the control information is applied,
where a carrier bearing the control information is the same as or different from the carrier to which the control information is applied, and
the mapping rule is a correspondence between a carrier and a physical resource.

It can be understood that when preparing to send control information by using an EPDCCH physical resource set, the foregoing base station determines, from the EPDCCH physical resource set according to a mapping rule, a physical resource for sending the control information, and then sends the control information to a UE, so that the UE determines, according to the mapping rule, a carrier to which the control information is applied.

For example, the foregoing physical resource may include the enhanced physical downlink control channel resource set (EPDCCH-PRB-SET). In an actual application, the enhanced physical downlink control channel resource set may include content such as a PRB Pair, an ECCE, an EREG, or an antenna port (AP).

Further, the foregoing mapping rule may include: a rule of establishing a correspondence between an EPDCCH physical resource set and a carrier by using an EPDCCH physical resource set as a unitestablishing a correspondence between an EPDCCH physical resource set and a carrier by using an EPDCCH physical resource set as a unit;
or a rule of establishing a correspondence between an enhanced control channel element ECCE and a carrier by using an ECCE in the EPDCCH physical resource set as an element;
or a rule of establishing a correspondence between a physical resource block pair PRB Pair and a carrier by using a PRB Pair in the EPDCCH physical resource set as an element;
or a rule of establishing a correspondence between an enhanced resource element group EREG and a carrier by using an EREG in the EPDCCH physical resource set as an element;
or a rule of establishing a correspondence between an antenna port AP and a carrier by using an AP in the EPDCCH physical resource set as an element.

It should be understood that in the mapping rule, the correspondence between a carrier and a physical resource (such as an EPDCCH-PRB-SET, a PRB Pair, an ECCE, an EREG, or an AP) may be a one-to-one correspondence, or may be a many-to-one or one-to-many correspondence, which is not limited in this embodiment and may be configured according to an actual requirement.

In a possible implementation scenario, the foregoing mapping rule may be configured and sent to the UE by the base station. Alternatively, in another possible implementation scenario, the foregoing mapping rule may be a rule which is predefined and known to both the base station and the UE. For example, the foregoing mapping rule may be a standard implemented by both the base station and the UE which is defined in current LTE-A.

It can be known from the foregoing embodiment that, according to the method for transmitting control information in this embodiment, a base station sends control information to a UE by using an EPDCCH physical resource set, and before sending the control information, the base station determines, according to a mapping rule, a physical resource for sending the control information, so that the UE determines, according the mapping rule of a correspondence between a physical resource and a carrier, a carrier to which the control information is applied, where a carrier bearing the control information is the same as or different from the carrier to which the control information is applied, thereby solving problems of large control information overheads and resource waste caused by lack of configuration of an EPDCCH which can support cross-carrier scheduling in an LTE system in the prior art.

It should be noted that in any one of the embodiments of the present invention, the mapping rule may include: a rule of establishing a correspondence between an EPDCCH physical resource set and a carrier by using an EPDCCH physical resource set as a unitestablishing a correspondence between an EPDCCH physical resource set and a carrier by using an EPDCCH physical resource set as a unit;
or the mapping rule may include: a rule of establishing a correspondence between an ECCE and the carrier by using an ECCE in the EPDCCH physical resource set as an element;
or a rule of establishing a correspondence between a physical resource block pair PRB Pair and a carrier by using a PRB Pair in the EPDCCH physical resource set as an element;
or a rule of establishing a correspondence between an enhanced resource element group EREG and a carrier by using an EREG in the EPDCCH physical resource set as an element;
or a rule of establishing a correspondence between an AP and the carrier by using an AP in the EPDCCH physical resource set as an element.

In a possible application scenario, the mapping rule may be: sorting EPDCCH physical resource sets, sorting carriers, and establishing a correspondence between the sorted EPDCCH physical resource sets and the sorted carriers.

As described in the following Table 1:

| | |
|---|---|
| EPDCCH physical resource set 1 | Carrier 1 |
| EPDCCH physical resource set 2 | Carrier 2 |
| EPDCCH physical resource set 3 | Carrier 3 |

For example, the sorting EPDCCH physical resource sets may be sorting the EPDCCH physical resource sets according to IDs of the EPDCCH physical resource sets. In addition, the sorting carriers may be sorting the carriers according to IDs of the carriers. Certainly, in another embodiment, the sorting may also be performed in another manner. This embodiment is only exemplary, and does not limit the sorting manner.

In another possible application scenario, the mapping rule may be: grouping ECCEs in the EPDCCH physical resource set, sorting carriers, and establishing a correspondence between the grouped ECCEs and the sorted carriers.

For example, the number of the carriers is divided by index values of the ECCEs when the ECCEs in the EPDCCH physical resource sets are grouped, to obtain remainders, and ECCEs with a same operation result are grouped into a group; and a correspondence is established between the group and a carrier which has a same sequence number as the operation result after the carriers are sorted. Certainly, there may be a plurality of manners of sorting the carriers, and there may also be a plurality of manners of grouping the ECCEs in the EPDCCH physical resource set. The mapping rule in this embodiment is only exemplary.

### Embodiment 2

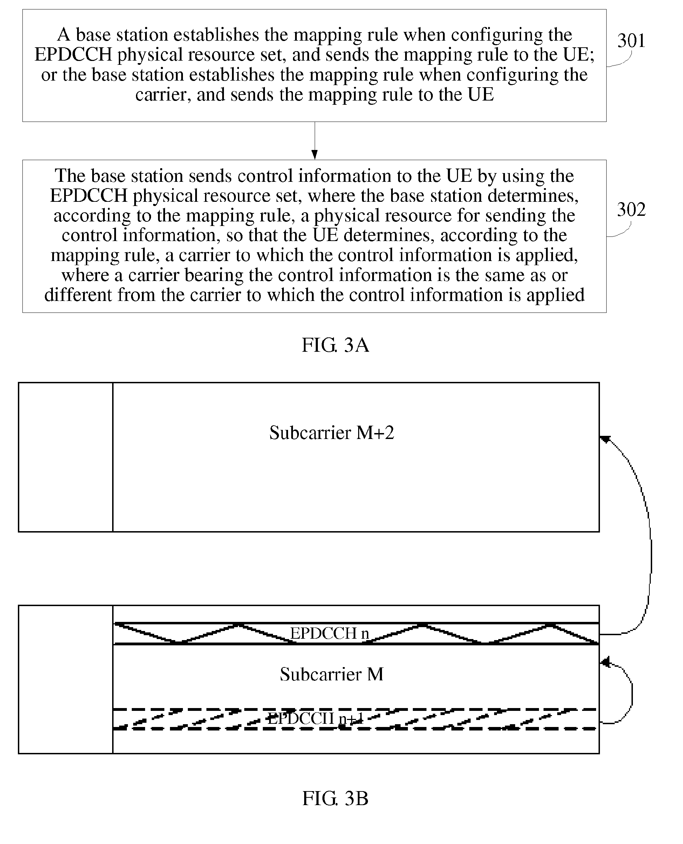

FIG. 3A shows a method for transmitting control information according to an embodiment of the present invention. As shown in FIG. 3A, the method for transmitting control information in this embodiment is described as follows:
301: A base station establishes a mapping rule when configuring an EPDCCH physical resource set, and sends a mapping rule to a UE; or a base station establishes a mapping rule when configuring a carrier, and sends the mapping rule to a UE,
where the mapping rule is a correspondence between a physical resource and a carrier.
302: The base station sends control information to the UE by using the EPDCCH physical resource set, wherein the base station determines, according to the mapping rule, a physical resource for sending the control information, so that the UE determines, according to the mapping rule, a carrier to which the control information is applied,
where a carrier bearing the control information is the same as or different from the carrier to which the control information is applied.

That is, when preparing to send control information to the UE by using the EPDCCH physical resource set, the base station determines, from the EPDCCH physical resource set according to the mapping rule, the physical resource for sending the control information, and then sends the control information.

It should be noted that cross-carrier scheduling refers to that a carrier bearing control information and a carrier to which the control information is applied may not be located on a same carrier, or are a same carrier. The foregoing carrier to which the control information is applied may be a carrier where service data corresponding to the control information is located. For example, control information applied to carrier B is sent on carrier A to the UE. Certainly, the cross-carrier scheduling may include scheduling of service data, and may also include scheduling of control information, for example, power control information.

According to the method for transmitting control information in this embodiment, when sending control information to a UE, a base station determines, according to a mapping rule, a physical resource for sending the control information, thereby solving problems of large control information overheads and resource waste caused by lack of configuration of an EPDCCH which can support cross-carrier scheduling in an LTE system in the prior art.

As shown in FIG. 3B, FIG. 3B shows a diagram of a correspondence between EPDCCH physical resource sets and carriers. In FIG. 3B, EPDCCH physical resource sets do not overlap at all in a frequency domain, and in this case, an EPDCCH physical resource set n+1 may schedule a carrier M while an EPDCCH physical resource set n may schedule a carrier M+2.

That is, when configuring an EPDCCH physical resource set, the base station may establish a mapping rule, such as a correspondence between the EPDCCH physical resource set n+1 and the carrier M or a correspondence between the EPDCCH physical resource set n and the carrier M+2.

In another embodiment, a base station configures an EPDCCH physical resource set X for a UE, and assuming that at this time, the base station indicates that the EPDCCH physical resource set X is associated with a carrier A, when configuring the EPDCCH physical resource set X, the base station includes a mapping rule in configuration information of the EPDCCH physical resource set X; correspondingly, the base station configures an EPDCCH physical resource set Y for the UE, and assuming that at this time, the base station indicates that the EPDCCH physical resource set Y is associated with a carrier B, when configuring the EPDCCH physical resource set Y, the base station includes a mapping rule in configuration information of the EPDCCH physical resource set Y It can be understood that in the mapping rule, the EPDCCH physical resource sets and the carriers have a one-to-one correspondence, such as the correspondence between the EPDCCH physical resource set X and the carrier A or the correspondence between the EPDCCH physical resource set Y and the carrier B in the foregoing examples. Based on the foregoing, the UE may detect control information belonging to the carrier A in the EPDCCH physical resource set X, and the UE may detect control information belonging to the carrier B in the EPDCCH physical resource set Y, thereby solving problems of large control information overheads and resource waste caused by lack of configuration of an EPDCCH which can support cross-carrier scheduling in an LTE system in the prior art.

For another example, the base station configures the EPDCCH physical resource set X for the UE, and assuming that at this time, the base station indicates that the EPDCCH physical resource set X is associated with the carrier A and a carrier C, when configuring the EPDCCH physical resource set X, the base station includes a mapping rule in configuration information of the EPDCCH physical resource set X; correspondingly, the base station configures the EPDCCH physical resource set Y for the UE, and assuming that at this time, the base station indicates that the EPDCCH physical resource set Y is associated with the carrier B, when configuring the EPDCCH physical resource set Y, the base station includes a mapping rule in configuration information of the EPDCCH physical resource set Y. It can be understood that in the mapping rule, the EPDCCH physical resource sets and the carriers may have a one-to-many correspondence, for example, the correspondence between the EPDCCH physical resource set X, and the carrier A and the carrier C in the foregoing example.

Based on the foregoing, the UE may detect control information belonging to the carrier A and the carrier C in the EPDCCH physical resource set X, and the UE may detect control information belonging to the carrier B in the EPDCCH physical resource set Y, thereby solving problems of large control information overheads and resource waste caused by lack of configuration of an EPDCCH which can support cross-carrier scheduling in an LTE system in the prior art.

For another example, the base station configures the EPDCCH physical resource set X for the UE, and assuming that at this time, the base station indicates the EPDCCH physical resource set X is associated the carrier A, when configuring the EPDCCH physical resource set X, the base station includes a mapping rule in configuration information of the EPDCCH physical resource set X; correspondingly, the base station configures the EPDCCH physical resource set Y for the UE, and assuming that at this time, the base station indicates that the EPDCCH physical resource set Y is associated with the carrier B, when configuring the EPDCCH physical resource set Y, the base station includes a mapping rule in configuration information of the EPDCCH physical resource set Y; correspondingly, the base station configures an EPDCCH physical resource set Z for the UE, and assuming that at this time, the base station indicates that the EPDCCH physical resource set Z is associated with the carrier A, when configuring the EPDCCH physical resource set Z, the base station includes a mapping rule in configuration information of the EPDCCH physical resource set Z. It can be understood that in the mapping rule, the EPDCCH physical resource sets and the carriers may have a many-to-one correspondence, for example, the correspondence between, the EPDCCH physical resource set X and the EPDCCH physical resource set Z, and the carrier A in the foregoing exampl.

Based on the foregoing, the UE may detect control information belonging to the carrier A in the EPDCCH physical resource set X, the UE may detect control information belonging to the carrier B in the EPDCCH physical resource set Y, and the UE may detect control information belonging to the carrier A in the EPDCCH physical resource set Z, thereby solving problems of large control information overheads and resource waste caused by lack of configuration of an EPDCCH which can support cross-carrier scheduling in an LTE system in the prior art.

In another exemplary embodiment, when a base station configures information about a plurality of carriers for a UE, the configured carriers may be configured to correspond to EPDCCH physical resource sets which can be used for scheduling.

Similarly, with reference to FIG. 3B, carriers configured by the base station may include a carrier M, a carrier M+2, and a carrier M+1. When configuring information about the carriers, the base station configures the carrier M and the carrier M+2 for the UE, and configures corresponding EPDCCH physical resource sets n+1 and n for the UE.

Assuming that the base station indicates that the carrier M is scheduled on the EPDCCH physical resource set n+1, and indicates that the carrier M+2 is scheduled on the EPDCCH physical resource set n, when configuring the carrier M, the base station includes a sub-mapping rule, for example, a correspondence between the carrier M and the EPDCCH physical resource set n+1, in configuration information of the carrier; and when configuring the carrier M+2, the base station includes another sub-mapping rule, for example, a correspondence between the carrier M+2 and the EPDCCH physical resource set n, in configuration information of the carrier M+2. The foregoing sub-mapping rules may form a mapping rule, or the sub-mapping rules may be used as individual sub-mapping rules. It should be noted that the sub-mapping rules in this embodiment are one-to-one sub-mapping rules.

Further, the UE may detect control information belonging to the carrier M in the EPDCCH physical resource set n+1, and the UE may detect control information belonging to the carrier M+2 in the EPDCCH physical resource set n.

In another embodiment, assuming that a base station indicates that a carrier M and a carrier M+1 are scheduled on an EPDCCH physical resource set n+1, and indicates that the carrier M+2 is scheduled on an EPDCCH physical resource set n, when configuring the carrier M, the base station includes a sub-mapping rule, for example, a correspondence rule between the carrier M and the EPDCCH physical resource set n+1, in configuration information of the carrier M; and when configuring the carrier M+1, the base station includes a sub-mapping rule, for example, a correspondence rule between the carrier M+1 and the EPDCCH physical resource set n+1, in configuration information of the carrier M+1; and when configuring the carrier M+2, the base station includes another sub-mapping rule, for example, a correspondence rule between the carrier M+2 and the EPDCCH physical resource set n, in configuration information of the carrier M+2. The foregoing sub-mapping rules may form a mapping rule, or the sub-mapping rules may be used as individual sub-mapping rules. It should be noted that the mapping rule in this embodiment is a many-to-one mapping rule between carriers and an EPDCCH physical resource set, for example, the mapping rule of the corresponding between the carriers M and M+1 and the EPDCCH physical resource set n in the foregoing.

Further, the UE may detect control information belonging to the carrier M and the carrier M+1 in the EPDCCH physical resource set n+1, and the UE may detect control information belonging to the carrier M+2 in the EPDCCH physical resource set n.

In another embodiment, assuming that a base station indicates that a carrier M is scheduled on an EPDCCH physical resource set n+1, indicates that a carrier M+2 is scheduled on an EPDCCH physical resource set n, and indicates that the carrier M is scheduled on an EPDCCH physical resource sets n+2, when configuring the carrier M, the base station includes a sub-mapping rule, for example, a correspondence rule between the carrier M and the EPDCCH physical resource set n+1 and the EPDCCH physical resource set n+2, in configuration information of the carrier M; and when configuring the carrier M+2, the base station includes another sub-mapping rule, for example, a correspondence rule between the carrier M+2 and the EPDCCH physical resource set n, in configuration information of the carrier M+2. The foregoing sub-mapping rules may form a mapping rule, or the sub-mapping rules may be used as individual sub-mapping rules. It should be noted that the mapping rule in this embodiment is a one-to-many mapping rule between a carrier and EPDCCH physical resource sets, for example, the rule of correspondence between the carrier M, and the EPDCCH physical resource set n+1 and the EPDCCH physical resource set n+2 in the foregoing.

Further, the UE may detect control information belonging to the carrier M in the EPDCCH physical resource set n+1, the UE may detect control information belonging to the carrier M+2 in the EPDCCH physical resource set n, and the UE may detect control information belonging to the carrier M in the EPDCCH physical resource set n+2.

In a second exemplary embodiment, when a base station configures information about a plurality of carriers for a UE, the carriers configured by the base station may include: a carrier A, a carrier B, and a carrier C; correspondingly, when configuring the carrier A and the carrier B for the UE, the base station may configure a corresponding EPDCCH physical resource set X and EPDCCH physical resource set Y for the UE.

The base station may sort the carrier A and the carrier B according to a certain standard, for example, carrier sequence numbers; and meanwhile, the base station may sort the EPDCCH physical resource sets X and Y, which are configured for the UE, according to a certain standard, for example, sequence numbers of first PRB Pairs of the EPDCCH physical resource sets. The sorted carriers are mapped to the sorted EPDCCH physical resource sets.

For example, an order of the carriers is {A, B}, and an order of the EPDCCH physical resource sets is {X, Y}; then, {A, X} is a correspondence, and {B, Y} is a correspondence. In this case, the UE may detect control information belonging to the carrier A in the EPDCCH physical resource set X, and the UE may detect control information belonging to the carrier B in the EPDCCH physical resource set Y. The foregoing mapping rule is a predefined mapping rule, and the carriers and the EPDCCH physical resource sets have a one-to-one correspondence.

For another example, the base station has the carrier A, the carrier B, and the carrier C, the base station configures the carrier A and the carrier B for the UE, and the base station configures the EPDCCH physical resource set X, the EPDCCH physical resource set Y, and an EPDCCH physical resource set Z for the UE. In this case, the base station may sort the carrier A and the carrier B according to a certain standard, for example, carrier sequence numbers; and meanwhile, the base station may sort the EPDCCH physical resource sets X, Y, and Z, which are configured for the UE, according to a certain standard, for example, sequence numbers of first PRB Pairs of the EPDCCH physical resource sets. The sorted carriers are mapped to the sorted EPDCCH physical resource sets. For example, an order of the carriers is {A, B}, and an order of the EPDCCH physical resource sets is {X, Y, Z}; then, {A, X, Z} is a correspondence, and {B, Y} is a correspondence. In this case, the UE may detect control information belonging to the carrier A in the EPDCCH physical resource set X, the UE may detect control information belonging to the carrier B in the EPDCCH physical resource set Y, and the UE may detect control information belonging to the carrier A in the EPDCCH physical resource set Z. In the foregoing predefined mapping rule described by using the examples, the carriers and the EPDCCH physical resource sets have a one-to-many correspondence.

For another example, the base station has the carrier A, the carrier B, the carrier C, and a carrier D, the base station configures the carrier A, the carrier B, and the carrier C for the UE, and the base station configures the EPDCCH physical resource set X and the EPDCCH physical resource set Y for the UE. In this case, the base station may sort the carrier A, the carrier B, and the carrier C according to a certain standard, for example, carrier sequence numbers; and meanwhile, the base station may sort the EPDCCH physical resource sets X and Y, which are configured for the UE, according to a certain standard, for example, sequence numbers of first PRB Pairs of the EPDCCH physical resource sets. The sorted carriers are mapped to the sorted EPDCCH physical resource sets. For example, an order of the carriers is {A, B, C}, and an order of the EPDCCH physical resource sets is {X, Y}; then, {A, X} is a correspondence, {B, Y} is a correspondence, and {C, X} is a correspondence. In this case, the UE may detect control information belonging to the carrier A and control information belonging to the carrier C in the EPDCCH physical resource set X, and the UE may detect control information belonging to the carrier B in the EPDCCH physical resource set Y. In the foregoing predefined mapping rule described by using the examples, the carriers and the EPDCCH physical resource sets have a many-to-one correspondence.

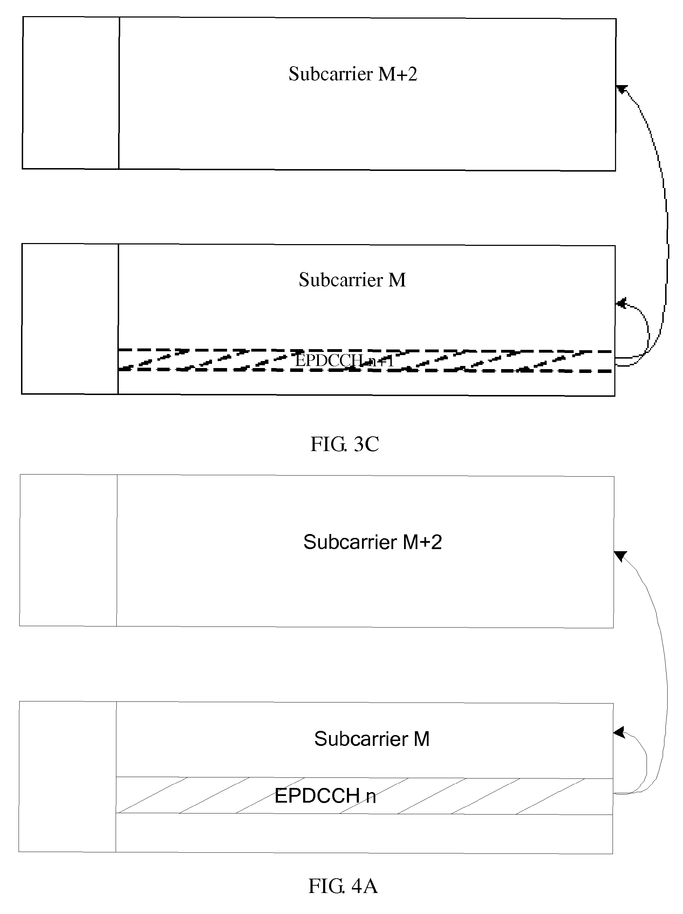

As shown in FIG. 3C, FIG. 3C shows a correspondence between EPDCCH physical resource sets and carriers. In FIG. 3C, EPDCCH physical resource sets scheduling different carriers (such as carrier M and carrier M+2) may overlap in a frequency domain. In this case, EPDCCH physical resource set n may schedule carrier M, and may also schedule carrier M+2.

For example, a base station has a carrier M, a carrier M+1, and a carrier M+2, the base station configures the carrier M and the carrier M+2 for a UE, and the base station configures an EPDCCH physical resource set n for the UE. An EPDCCH physical resource set includes logic ECCEs. Orthogonality of resources is implemented by allocating ECCE resources which do not overlap logically to the carrier M and the carrier M+2.

A part of the ECCEs are allocated to the carrier M, and a part of the ECCEs are allocated to the carrier M+2, where the part of the ECCEs may be logically continuous or discrete. For example, the first half and the second half may be continuous. ECCEs with odd or even sequence numbers are discrete, or dispersing is performed by using continuous ECCEs related to aggregation levels (AL) as granularity. The ECCEs may be Localized or distributed ECCEs. In the case of distributed EPDCCHs, grouping may be performed according to EREGs.

### Embodiment 3

This embodiment provides a method for transmitting control information, specifically including:
sending, by a base station, a control information to a UE by using an enhanced physical downlink control channel EPDCCH physical resource set in combination with at least one piece of indication information, so that the UE determines, according to the at least one piece of indication information, a carrier to which the control information is applied,
where a carrier bearing the control information may be the same as or different from the carrier to which the control information is applied.

For example, the indication information may be a carrier indicator field, such as a CIF or any other field which can indicate a carrier to which the control information is applied. In an actual application, the indication information may include an identifier of at least one carrier to which the control information is applied. The identifier of the carrier may be a sequence number of the carrier or another identifier which can distinguish the carrier, and the identifier of the carrier is not limited in this embodiment.

Therefore, according to the method for transmitting control information in this embodiment, cross-carrier scheduling can be implemented by using an EPDCCH, thereby solving problems of large control information overheads and resource waste in the prior art.

As shown in FIG. 4A, when configuring an EPDCCH physical resource set for a UE, a base station needs to add a cross-carrier scheduling field for the configured physical resource set, where the field is used for indicating an ID of a carrier of which cross-carrier scheduling can be supported by the EPDCCH physical resource set. It should be particularly noted that EPDCCH physical resource sets corresponding to carrier may be the same.

For example, a system has a carrier M, a carrier M+1, and a carrier M+2, and the base station configures an EPDCCH physical resource set n for the UE; at this time, the base station indicates that the EPDCCH physical resource set n is associated with the carrier M and the carrier M+2. In this case, the UE may detect control information belonging to the carrier M and control information belonging to the carrier M+2 in the EPDCCH physical resource set.

For another example, the base station has a carrier A, a carrier B, and a carrier C, and the base station configures an EPDCCH physical resource set X and an EPDCCH physical resource set Y for the UE; at this time, the base station indicates that the EPDCCH physical resource set X is associated with the carrier A and the carrier B, and the base station indicates that the EPDCCH physical resource set Y is also associated with the carrier A and the carrier B. In this case, the UE may detect control information belonging to the carrier A and control information belonging to the carrier B in the EPDCCH physical resource set X, and the UE can also detect the control information belonging to the carrier A and the control information belonging to the carrier B in the EPDCCH physical resource set Y.

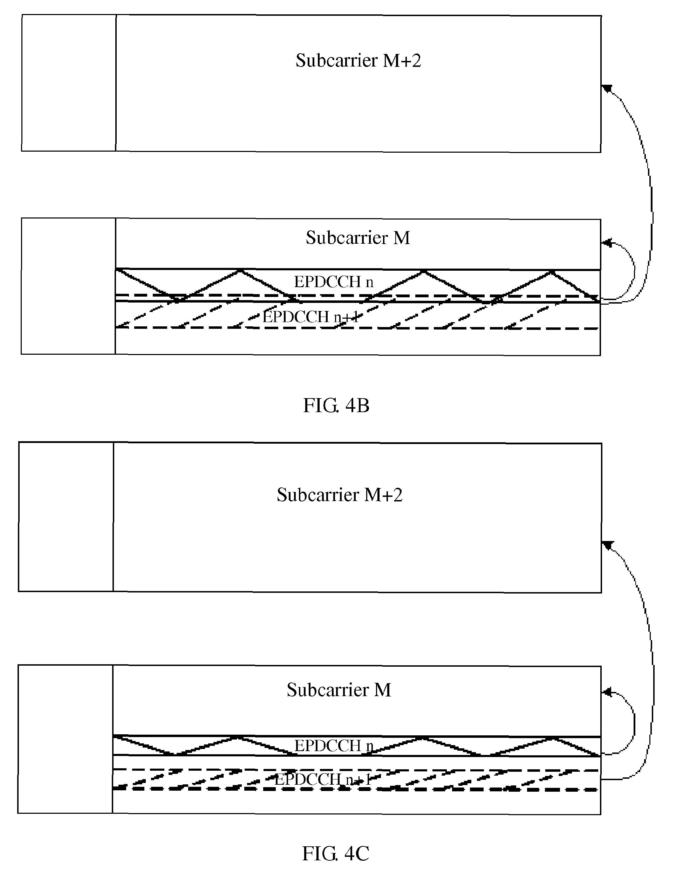

As shown in FIG. 4B, when configuring an EPDCCH physical resource set for a UE, a base station needs to add a cross-carrier scheduling field for the configured EPDCCH physical resource set, to indicate an ID of a carrier of which cross-carrier scheduling can be supported by the EPDCCH physical resource set. It should be particularly noted that EPDCCH physical resource sets corresponding to carrier may be different.

For example, the base station has the carrier M, the carrier M+1, and the carrier M+2, and the base station configures the EPDCCH physical resource set n for the UE; at this time, the base station indicates that the EPDCCH physical resource set n is associated with the carrier M. Meanwhile, the base station configures an EPDCCH physical resource set n+1 for the UE; at this time, the base station indicates that the EPDCCH physical resource set n+1 is associated with the carrier M+2. In this case, the UE may detect control information belonging to the carrier M in the EPDCCH physical resource set n, and the UE may detect control information belonging to the carrier M+2 in the EPDCCH physical resource set n+1. However, because the EPDCCH physical resource sets n and n+1 overlap (partially overlap) in space, it is possible that detected control signaling appears in an overlapping part of the EPDCCH physical resource sets n and n+1. To distinguish whether current detected control information belongs to the carrier M or the carrier M+2, indication information, for example, a CIF, needs to be used for distinguishing.

As shown in FIG. 4C, when configuring an EPDCCH physical resource set for a UE, a base station needs to add a cross-carrier scheduling field for the configured EPDCCH physical resource set, to indicate an ID of a carrier of which cross-carrier scheduling can be supported by the EPDCCH physical resource set. It should be particularly noted that EPDCCH physical resource sets corresponding to carrier in FIG. 4C are different, and the EPDCCH physical resource sets do not overlap at all.

For example, the base station has the carrier M, the carrier M+1, and the carrier M+2, and the base station configures the EPDCCH physical resource set n for the UE; at this time, the base station indicates that the EPDCCH physical resource set n is associated with the carrier M. Meanwhile, the base station configures the EPDCCH physical resource set n+1 for the UE; at this time, the base station indicates that the EPDCCH physical resource set n+1 is associated with the carrier M+2. In this case, the UE may detect control information belonging to the carrier M in the EPDCCH physical resource set n, and the UE may detect control information belonging to the carrier M+2 in the EPDCCH physical resource set n+1.

In addition, because the EPDCCH physical resource sets n and n+1 do not overlap in physical space, when the UE detects control information in the EPDCCH physical resource set n, it is impossible that the control information belonging to the carrier M is mistaken for that belonging to the carrier M+2; similarly, when the UE detects control information in the EPDCCH physical resource set n+1, it is also impossible that the control information belonging to the carrier M is mistaken for that belonging to the carrier M+2. In this case, a dynamic indication of a CIF field is unnecessary. The base station only needs to configure a static indication, that is, when detecting control information in the EPDCCH physical resource set n, the UE regards, by default, the control information as corresponding to the carrier M, and when detecting control signaling in the EPDCCH physical resource set n+1, the UE regards, by default, the control signaling as corresponding to the carrier M+2.

### Embodiment 4

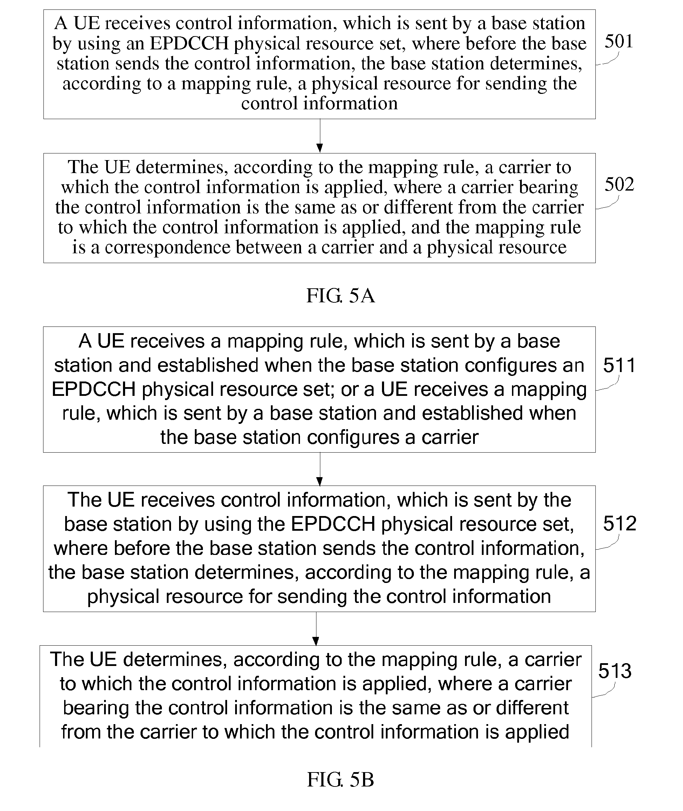

FIG. 5A shows a method for transmitting control information according to an embodiment of the present invention. As shown in FIG. 5A, the method for transmitting control information in this embodiment is described as follows:
501: A UE receives control information, which is sent by a base station by using an EPDCCH physical resource set, where before the base station sends the control information, the base station determines, according to a mapping rule, a physical resource for sending the control information.
502: The UE determines, according to the mapping rule, a carrier to which the control information is applied,
where a carrier bearing the control information is the same as or different from the carrier to which the control information is applied, and the mapping rule is a correspondence between a carrier and a physical resource.

That is, when preparing to send the control information by selecting the EPDCCH physical resource set, the base station determines, from the EPDCCH physical resource set according to the mapping rule, the physical resource for sending the control information.

The foregoing physical resource may include: an EPDCCH-PRB-SET, a PRB Pair in an EPDCCH-PRB-SET, an ECCE in an EPDCCH-PRB-SET, an EREG in an EPDCCH-PRB-SET, or an AP in an EPDCCH-PRB-SET. The physical resource is an EPDCCH-related resource, and this embodiment is only exemplary.

For example, the mapping rule may be a rule which is received by the UE and configured and sent by the base station.

In an actual application, the mapping rule may also be a rule which is predefined and known to both the base station and the UE. For example, the mapping rule is a rule known to both the base station and the UE which is defined in a current LTE-A standard.

The following briefly describes the foregoing mapping rule.

It can be understood that the mapping rule may include: a rule of establishing a correspondence between an EPDCCH physical resource set and a carrier by using an EPDCCH physical resource set as a unitestablishing a correspondence between an EPDCCH physical resource set and a carrier by using an EPDCCH physical resource set as a unit;
or the mapping rule may include: a rule of establishing a correspondence between an ECCE and the carrier by using an ECCE in the EPDCCH physical resource set as an element;
or a rule of establishing a correspondence between a PRB Pair and the carrier by using a PRB Pair in the EPDCCH physical resource set as an element;
or a rule of establishing a correspondence between an EREG and the carrier by using an EREG in the EPDCCH physical resource set as an element;
or a rule of establishing a correspondence between an AP and the carrier by using an AP in the EPDCCH physical resource set as an element.

In a possible application scenario, the mapping rule may be: sorting EPDCCH physical resource sets, sorting carriers, and establishing a correspondence between the sorted EPDCCH physical resource sets and the sorted carriers.

For example, the sorting EPDCCH physical resource sets may be sorting the EPDCCH physical resource sets according to IDs of the EPDCCH physical resource sets. In addition, the sorting carriers may be sorting the carriers according to IDs of the carriers. Certainly, in another embodiment, the sorting may also be performed in another manner. This embodiment is only exemplary, and does not limit the sorting manner.

In another possible application scenario, the mapping rule may be: grouping ECCEs in the EPDCCH physical resource set, sorting carriers, and establishing a correspondence between the grouped ECCEs and the sorted carriers.

For example, the number of the carriers is divided by index values of the ECCEs when the ECCEs in the EPDCCH physical resource sets are grouped, to obtain remainders, and ECCEs with a same operation result are grouped into a group; and a correspondence is established between the group and a carrier which has a same sequence number as the operation result after the carriers are sorted. Certainly, there may be a plurality of manners for sorting the carriers, and there may also be a plurality of manners for grouping the ECCEs in the EPDCCH physical resource set. The mapping rule in this embodiment is only exemplary.

Based on the foregoing, according to the method for transmitting control information in this embodiment, when receiving control information, a UE may determine, according a mapping rule, a carrier to which the control information is applied, where a carrier bearing the control information is the same as or different from the carrier to which the control information is applied. In this way, when an EPDCCH physical resource is used, cross-carrier scheduling can be also implemented, thereby solving problems of large control information overheads and resource waste caused by lack of configuration of an EPDCCH which can support cross-carrier scheduling in an LTE system in the prior art.

### EMBODIMENT 5

FIG. 5B shows a method for transmitting control information according to an embodiment of the present invention. As shown in FIG. 5B, the method for transmitting control information in this embodiment is described as follows:
511: A UE receives a mapping rule, which is sent by a base station and established by the base station when an EPDCCH physical resource set is configured; or a UE receives a mapping rule, which is sent by a base station and established by the base station when a carrier is configured,
   where the mapping rule may be a correspondence between a carrier and a physical resource.
512: The UE receives control information, which is sent by the base station by using the EPDCCH physical resource set, where before the base station sends the control information, the base station determines, according to the mapping rule, a physical resource for sending the control information.
513: The UE determines, according to the mapping rule, a carrier to which the control information is applied,
   where a carrier bearing the control information is the same as or different from the carrier to which the control information is applied.

As can be known from the foregoing embodiment, according to the method for transmitting control information in this embodiment, a base station pre-configures a mapping rule to be delivered to a UE, and then sends control information to the UE by using an EPDCCH physical resource set, where a physical resource for sending the control information is determined according to the mapping rule, so that the UE determines, according to the mapping rule of a correspondence between an EPDCCH physical resource set and a carrier, the carrier to which the control information is applied, where the carrier to which the control information is applied is the same as or different from a carrier bearing the control information, thereby solving problems of large control information overheads and resource waste caused by lack of configuration of an EPDCCH which can support cross-carrier scheduling in an LTE system in the prior art.

### Embodiment 6

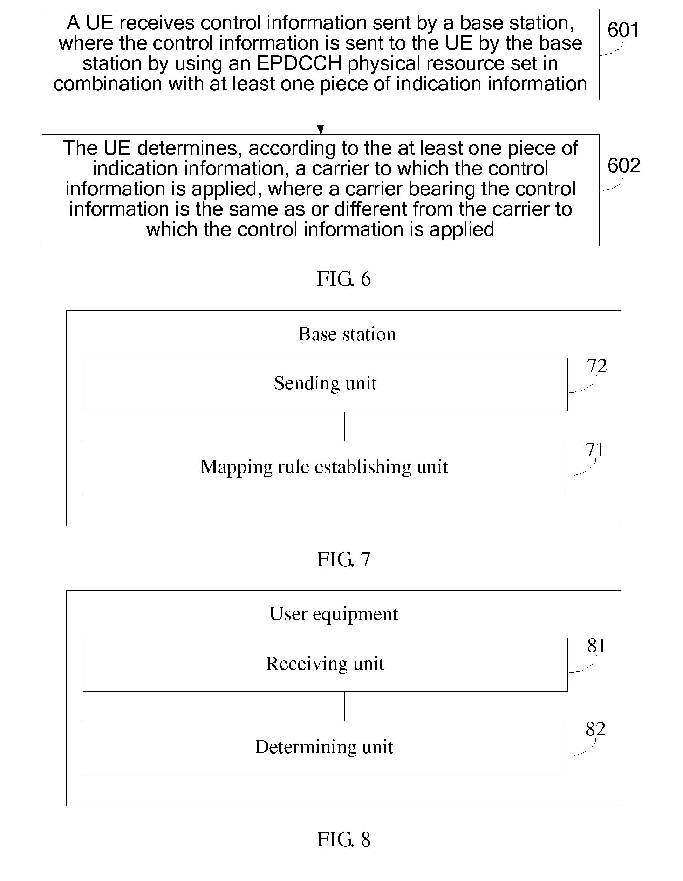

FIG. 6 shows a method for transmitting control information according to an embodiment of the present invention. As shown in FIG. 6, the method for transmitting control information in this embodiment is described as follows:
601: A UE receives control information sent by a base station, where the control information is sent to the UE by the base station by using an EPDCCH physical resource set in combination with at least one piece of indication information.
602: The UE determines, according to the at least one piece of indication information, a carrier to which the control information is applied,
   where a carrier bearing the control information is the same as or different from the carrier to which the control information is applied.

For example, the indication information may be a carrier indicator field, for example, a CIF. In addition, in practice, the indication information may include an identifier of at least one carrier to which the control information is applied.

Therefore, according to the method for transmitting control information in this embodiment, cross-carrier scheduling can be implemented in an EPDCCH, thereby solving problems of large control information overheads and resource waste in the prior art.

### Embodiment 7

According to another aspect of the present invention, an embodiment of the present invention further provides a base station. The base station includes a sending unit.

The sending unit is configured to send control information to a user equipment UE by using an enhanced physical downlink control channel EPDCCH physical resource set, wherein the base station determines, according to a mapping rule, a physical resource for sending the control information, so that the UE determines, according to the mapping rule, a carrier to which the control information is applied,
where a carrier bearing the control information is the same as or different from the carrier to which the control information is applied, and the mapping rule is a correspondence between a carrier and a physical resource.

Particularly, before the sending unit sends the control information, the base station may further configure the foregoing mapping rule and send the foregoing mapping rule to the UE by using the sending unit.

Alternatively, in another application scenario, the mapping rule is a rule which is predefined and known to both the base station and the UE.

As shown in FIG. 7, FIG. 7 shows a schematic structural diagram of a base station according to an embodiment of the present invention. The base station in this embodiment further includes a mapping rule establishing unit 71 and a sending unit 72.

The mapping rule establishing unit 71 is configured to establish a mapping rule when an EPDCCH physical resource set is configured, or configured to establish a mapping rule when a carrier is configured;
the sending unit 72 is configured to send the mapping rule established by the mapping rule establishing unit to the UE; and
the sending unit 72 is further configured to send control information to a user equipment UE by using an enhanced physical downlink control channel EPDCCH physical resource set, wherein the base station determines, according to the mapping rule, a physical resource for sending the control information, so that the UE determines, according to the mapping rule, a carrier to which the control information is applied.

Particularly, a carrier bearing the control information is the same as or different from the carrier to which the control information is applied, and the mapping rule is a correspondence between a carrier and a physical resource.

For example, the physical resource may include: an EPDCCH-PRB-SET, a PRB Pair in an EPDCCH-PRB-SET, an ECCE in an EPDCCH-PRB-SET, an EREG in an EPDCCH-PRB-SET, or an AP in an EPDCCH-PRB-SET. The physical resource is an EPDCCH-related resource, and this embodiment is only exemplary.

It can be understood that the mapping rule may include: a rule of establishing a correspondence between an EPDCCH physical resource set and a carrier by using an EPDCCH physical resource set as a unitestablishing a correspondence between an EPDCCH physical resource set and a carrier by using an EPDCCH physical resource set as a unit;
or the mapping rule may include: a rule of establishing a correspondence between an ECCE and the carrier by using an ECCE in the EPDCCH physical resource set as an element;
or a rule of establishing a correspondence between a PRB Pair and the carrier by using a PRB Pair in the EPDCCH physical resource set as an element;
or a rule of establishing a correspondence between an EREG and the carrier by using an EREG in the EPDCCH physical resource set as an element;
or a rule of establishing a correspondence between an AP and the carrier by using an AP in the EPDCCH physical resource set as an element.

In a possible application scenario, the mapping rule may be: sorting EPDCCH physical resource sets, sorting carriers, and establishing a correspondence between the sorted EPDCCH physical resource sets and the sorted carriers.

For example, the sorting EPDCCH physical resource sets may be sorting the EPDCCH physical resource sets according to IDs of the EPDCCH physical resource sets. In addition, the sorting carriers may be sorting the carriers according to IDs of the carriers. Certainly, in another embodiment, the sorting may be further performed in another manner. This embodiment is only exemplary, and does not limit the sorting manner.

In another possible application scenario, the mapping rule may be: grouping ECCEs in the EPDCCH physical resource set, sorting carriers, and establishing a correspondence between the grouped ECCEs and the sorted carriers.

For example, the number of the carriers is divided by index values of the ECCEs when the ECCEs in the EPDCCH physical resource sets are grouped, to obtain remainders, and ECCEs with a same operation result are grouped into a group; and a correspondence is established between the group and a carrier which has a same sequence number as the operation result after the carriers are sorted. Certainly, there may be a plurality of manners for sorting the carriers, and there may also be a plurality of manners for grouping the ECCEs in the EPDCCH physical resource set. The mapping rule in this embodiment is only exemplary.

The foregoing base station can configure an EPDCCH, so as to implement cross-carrier scheduling by using the EPDCCH, thereby solving problems of large control information overheads and resource waste in the prior art.

In an actual application, the base station may include a processor and a memory, where the processor is configured to perform the functions implemented by the foregoing sending unit; further, the processor is further configured to perform the functions implemented by the foregoing mapping rule establishing unit; and the memory is configured to store the mapping rule.

For example, the processor is configured to send control information to a user equipment UE by using an enhanced physical downlink control channel EPDCCH physical resource set, wherein the base station determines, according to the mapping rule, a physical resource for sending the control information, so that the UE determines, according to the mapping rule, a carrier to which the control information is applied.

Particularly, a carrier bearing the control information is the same as or different from the carrier to which the control information is applied, and the mapping rule is a correspondence between a carrier and a physical resource.

That is, when preparing to send the control information by using the EPDCCH physical resource set, the processor determines, from the EPDCCH physical resource set according to the mapping rule, the physical resource for sending the control information, and then sends the control information to the UE.

In a exemplary implementation scenario, the processor is further configured to establish the mapping rule when the EPDCCH physical resource set is configured; or configured to establish the mapping rule when the carrier is configured.

Further, the processor sends the established mapping rule to the UE.

The foregoing base station can configure an EPDCCH, so as to implement cross-carrier scheduling by using the EPDCCH, thereby solving problems of large control information overheads and resource waste in the prior art.

### Embodiment 8

According to another aspect of the present invention, an embodiment of the present invention further provides a base station. The base station includes a sending unit, where the sending unit is configured to send a control information to a UE by using an EPDCCH physical resource set in combination with at least one piece of indication information, so that the UE determines, according to the at least one piece of indication information, a carrier to which the control information is applied, where a carrier bearing the control information is the same as or different from the carrier to which the control information is applied.

For example, the indication information may be a carrier indicator field, for example, a CIF. Certainly, in an actual application, the indication information may include an identifier of at least one carrier to which the control information is applied.

The base station in this embodiment can configure an EPDCCH, so as to implement cross-carrier scheduling by using the EPDCCH, thereby solving problems of large control information overheads and resource waste in the prior art.

In an actual application, the base station may include a processor, where the processor is configured to perform the functions implemented by the foregoing sending unit.

For example, the processor may be configured to send a control information to a UE by using an EPDCCH physical resource set in combination with at least one piece of indication information, so that the UE determines, according to the at least one piece of indication information, a carrier to which the control information is applied, where a carrier bearing the control information is the same as or different from the carrier to which the control information is applied.

### Embodiment 9

According to another aspect of the present invention, an embodiment of the present invention further provides a user equipment. As shown in FIG. 8, the user equipment includes a receiving unit 81 and a determining unit 82.

The receiving unit 81 receives control information, which is sent by a base station by using an enhanced physical downlink control channel EPDCCH physical resource set, where before the base station sends the control information, the base station determines, according to a mapping rule, a physical resource for sending the control information; and
the determining unit 82 is configured to determine, according to the mapping rule, a carrier to which the control information is applied,
where a carrier bearing the control information is the same as or different from the carrier to which the control information is applied, and the mapping rule is a correspondence between a carrier and a physical resource.

For example, the mapping rule may be a rule which is received by the receiving unit 81 and configured and sent by the base station;
or the mapping rule is a rule which is predefined and known to both the base station and the UE.

In an optional application scenario, the receiving unit 81 is further configured to:
receive the mapping rule, which is sent by the base station and established by the base station when the EPDCCH physical resource set is configured;
or
receive the mapping rule, which is sent by the base station and established by the base station when the carrier is configured.

For the mapping rule, reference may be made to the description in other embodiments.

The user equipment in this embodiment can implement cross-carrier scheduling in an EPDCCH, thereby solving problems of large control information overheads and resource waste in the prior art.

In an actual application, the user equipment may include a processor and a memory, where the processor is configured to perform the functions implemented by the receiving unit 81 and the determining unit 82, and the memory is configured to store the mapping rule.

For example, the processor of the user equipment may be configured to receive control information, which is sent by a base station by using an EPDCCH physical resource set, where before the base station sends the control information, the base station determines, according to a mapping rule, a physical resource for sending the control information; and is configured to determine, according to the mapping rule, a carrier to which the control information is applied.

A carrier bearing the control information is the same as or different from the carrier to which the control information is applied, and the mapping rule is a correspondence between a carrier and a physical resource.

### Embodiment 10

According to another aspect of the present invention, an embodiment of the present invention further provides a user equipment. As shown in FIG. 8, the user equipment includes a receiving unit 81 and a determining unit 82.

The receiving unit 81 is configured to receive control information sent by a base station, where the control information is sent to the user equipment UE by the base station by using an enhanced physical downlink control channel EPDCCH physical resource set in combination with at least one piece of indication information; and
the determining unit 82 is configured to determine, according to the at least one piece of indication information, a carrier to which the control information is applied,
where a carrier bearing the control information is the same as or different from the carrier to which the control information is applied.

For example, the indication information may be a carrier indicator field, for example, a CIF. In an actual application, the indication information may include an identifier of at least one carrier to which the control information is applied.

The user equipment in this embodiment can implement cross-carrier scheduling in an EPDCCH, thereby solving problems of large control information overheads and resource waste in the prior art.

It should be noted that the base station in this embodiment is a broad concept. The base station may be a base transceiver station, a base station controller, a NodeB, an eNodeB, a radio network controller (RNC), or the like. The base station is not limited in this embodiment and is set according to an actual requirement. In addition, the foregoing processor may be a central processing unit (CPU).

It should be noted that in the foregoing embodiments of the user equipment and the base station, division of the functional modules is only exemplary, and in an actual application, the foregoing functions may be assigned to and implemented by different functional units according to requirements, for example, a configuration requirement on related hardware or convenience for implementation of software, that is, the inner structures of the user equipment and the base station are divided into different functional units, so as to complete all or a part of the functions in the foregoing description. In addition, in an actual application, corresponding functional units in the embodiments may be implemented by corresponding hardware, or may be implemented by corresponding hardware executing corresponding software. For example, the foregoing sending unit may be hardware, for example, a transmitter, having the functions of the foregoing sending unit, or may be an ordinary processor or other hardware devices capable of executing a corresponding computer program to complete the foregoing functions. For another example, the foregoing determining unit may be hardware, for example, a processor, having the functions of the determining unit, or may be other hardware devices capable of executing a corresponding computer program to complete the foregoing functions. For another example, the foregoing receiving unit may be hardware, for example, a receiver, having the functions of the foregoing receiving unit, or may be an ordinary processor or other hardware devices capable of executing a corresponding computer program to complete the foregoing functions (the foregoing description principle is applicable to all the embodiments provided by this specification).

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to a part or all of the technical features thereof. Such modifications or replacements do not cause the essence of corresponding technical solutions to depart from the scope of the technical solutions of the embodiments of the present invention.

## Claims

1. A method for transmitting control information, comprising:
sending, by a base station, control information to a user equipment UE by using an enhanced physical downlink control channel EPDCCH physical resource set, wherein the base station determines, according to a mapping rule, a physical resource for sending the control information, so that the UE determines, according to the mapping rule, a carrier to which the control information is applied,
wherein a carrier bearing the control information is the same as or different from the carrier to which the control information is applied, and
the mapping rule is a correspondence between a carrier and a physical resource.

2. The method according to claim 1, wherein
the physical resource comprises the EPDCCH physical resource set EPDCCH-PRB-SET.

3. The method according to claim 1 or 2, wherein the mapping rule comprises:
a rule of establishing a correspondence between an EPDCCH physical resource set and a carrier by using an EPDCCH physical resource set as a unit;
or
a rule of establishing a correspondence between an enhanced control channel element ECCE and a carrier by using an ECCE in the EPDCCH physical resource set as an element;
or
a rule of establishing a correspondence between a physical resource block pair PRB Pair and a carrier by using a PRB Pair in the EPDCCH physical resource set as an element;
or
a rule of establishing a correspondence between an enhanced resource element group EREG and a carrier by using an EREG in the EPDCCH physical resource set as an element;
or
a rule of establishing a correspondence between an antenna port AP and a carrier by using an AP in the EPDCCH physical resource set as an element.

4. The method according to claim 1, 2, or 3, wherein
the mapping rule is configured and sent to the UE by the base station;
or the mapping rule is a rule which is predefined and known to both the base station and the UE.

5. The method according to claim 1, 2, or 3, before the sending, by a base station, control information to a UE by using an EPDCCH physical resource set, further comprising:
establishing, by the base station, the mapping rule when configuring the EPDCCH physical resource set, and sending the mapping rule to the UE;
or
establishing, by the base station, the mapping rule when configuring the carrier, and sending the mapping rule to the UE.

6. The method according to claim 3, wherein the rule of establishing a correspondence between an EPDCCH physical resource set and a carrier by using an EPDCCH physical resource set as a unitestablishing a correspondence between an EPDCCH physical resource set and a carrier by using an EPDCCH physical resource set as a unit comprises:
sorting EPDCCH physical resource sets, sorting carriers, and establishing a correspondence between the sorted EPDCCH physical resource sets and the sorted carriers.

7. The method according to claim 6, wherein
the sorting EPDCCH physical resource sets is specifically:
sorting the EPDCCH physical resource sets according to IDs of the EPDCCH physical resource sets;
and/or
the sorting carriers is specifically:
sorting the carriers according to IDs of the carriers.

8. The method according to claim 3, wherein the rule of establishing a correspondence between an ECCE and the carrier by using an ECCE in the EPDCCH physical resource set as an element comprises:
grouping ECCEs in the EPDCCH physical resource set, sorting carriers, and establishing a correspondence between the grouped ECCEs and the sorted carriers.

9. The method according to claim 8, wherein the grouping ECCEs in the EPDCCH physical resource set, sorting carriers, and establishing a correspondence between the grouped ECCEs and the sorted carriers is specifically:
dividing the number of the carriers by index values of the ECCEs when the ECCEs in the EPDCCH physical resource sets are grouped, to obtain remainders, and grouping ECCEs with a same operation result into a group; and establishing a correspondence between the group and a carrier which has a same sequence number as the operation result after the carriers are sorted.

10. A method for transmitting control information, comprising:
receiving, by a user equipment UE, control information, which is sent by a base station by using an enhanced physical downlink control channel EPDCCH physical resource set, wherein before the base station sends the control information, the base station determines, according to a mapping rule, a physical resource for sending the control information; and
determining, by the UE according to the mapping rule, a carrier to which the control information is applied,
wherein a carrier bearing the control information is the same as or different from the carrier to which the control information is applied, and the mapping rule is a correspondence between a carrier and a physical resource.

11. The method according to claim 10, wherein
the physical resource comprises the EPDCCH physical resource set EPDCCH-PRB-SET.

12. The method according to claim 10 or 11, wherein the mapping rule comprises:
a rule of establishing a correspondence between an EPDCCH physical resource set and a carrier by using an EPDCCH physical resource set as a unitestablishing a correspondence between an EPDCCH physical resource set and a carrier by using an EPDCCH physical resource set as a unit;
or
a rule of establishing a correspondence between an enhanced control channel element ECCE and a carrier by using an ECCE in the EPDCCH physical resource set as an element;
or
a rule of establishing a correspondence between a physical resource block pair PRB Pair and a carrier by using a PRB Pair in the EPDCCH physical resource set as an element;
or
a rule of establishing a correspondence between an enhanced resource element group EREG and a carrier by using an EREG in the EPDCCH physical resource set as an element;
or
a rule of establishing a correspondence between an antenna port AP and a carrier by using an AP in the EPDCCH physical resource set as an element.

13. The method according to claim 10, 11, or 12, wherein
the mapping rule is a rule which is received by the UE and configured and sent by the base station;
or the mapping rule is a rule which is predefined and known to both the base station and the UE.

14. The method according to claim 10, 11, or 12, before the receiving, by a UE, control information, which is sent by a base station by using an EPDCCH physical resource set in the physical resource, further comprising:
receiving, by the UE, the mapping rule, which is sent by the base station and established by the base station when the EPDCCH physical resource set is configured;
or
receiving, by the UE, the mapping rule, which is sent by the base station and established by the base station when the carrier is configured.

15. A base station, comprising:a sending unit, configured to send control information to a user equipment UE by using an enhanced physical downlink control channel EPDCCH physical resource set, wherein the base station determines, according to the mapping rule, a physical resource for sending the control information, so that the UE determines, according to the mapping rule, a carrier to which the control information is applied,
wherein a carrier bearing the control information is the same as or different from the carrier to which the control information is applied, and
the mapping rule is a correspondence between a carrier and a physical resource.

16. The base station according to claim 15, wherein the mapping rule is configured by the base station and sent to the UE by using the sending unit;
or
the mapping rule is a rule which is predefined and known to both the base station and the UE.

17. The base station according to claim 15 or 16, further comprising:
a mapping rule establishing unit, configured to establish the mapping rule when the EPDCCH physical resource set is configured;
or configured to establish the mapping rule when the carrier is configured, wherein
correspondingly, the sending unit is configured to send the mapping rule established by the mapping rule establishing unit to the UE.

18. A user equipment, comprising:
a receiving unit, configured to receive control information, which is sent by a base station by using an enhanced physical downlink control channel EPDCCH physical resource set, wherein before the base station sends the control information, the base station determines, according to a mapping rule, a physical resource for sending the control information; and
a determining unit, configured to determine, according to the mapping rule, a carrier to which the control information is applied,
wherein a carrier bearing the control information is the same as or different from the carrier to which the control information is applied, and the mapping rule is a correspondence between a carrier and a physical resource.

19. The user equipment according to claim 18, wherein
the mapping rule is a rule which is received by the receiving unit and configured and sent by the base station;
or the mapping rule is a rule which is predefined and known to both the base station and the UE.

20. The user equipment according to claim 18, wherein the receiving unit is further configured to
receive the mapping rule, which is sent by the base station and established by the base station when the EPDCCH physical resource set is configured;
or
receive the mapping rule, which is sent by the base station and established by the base station when the carrier is configured.
